# EUROPÄISCHE PATENTANMELDUNG

(11) **EP 1 287 972 A1**
(43) Veröffentlichungstag der Anmeldung: **05.03.2003**
(21) Anmeldenummer: 02015999.2
(22) Anmeldetag: 18.07.2002
(51) Int. Cl.: B29C 70/84, B22F 7/00, B60N 2/68

(54) **Rahmen aus Hohlprofilen**

(30) Priorität: 28.08.2001 DE 10141946; 30.03.2002 DE 10214476
(71) Anmelder: Bayerische Motoren Werke Aktiengesellschaft, 80809 München (DE)
(72) Erfinder: Wolff, Thomas, 84028 Landshut (DE)

(57) **Zusammenfassung**

Allgemein bekannt sind Rahmen aus Hohlprofilen mit mindestens einem Knotenpunkt. Solche Knotenpunkte zwischen zwei Hohlprofilen sind nur sehr aufwendig als Gussknoten oder durch komplizierte Schweißprozesse darstellbar. Der Erfindung liegt die Aufgabe zugrunde, einen Rahmen aus Hohlprofilen zu schaffen, bei dem zumindest ein Knotenpunkt besonders einfach hergestellt ist.

Dazu weist ein Rahmen aus Hohlprofilen (**1, 2**) mindestens einen Knotenpunkt (**3**) auf, an dem mindestens ein Hohlprofil (**2**) eine Aussparung hat, in der ein anderes Hohlprofil (**1**) zumindest in einer Richtung formschlüssig gehalten ist. Kerngedanke der Erfindung ist es, dass auf die Hohlprofile (**1, 2**) zumindest im Bereich des Knotenpunktes (**3**) Formmasse kraftschlüssig und / oder formschlüssig aufgeschäumt ist. Durch die erfindungsgemäße Gestaltung eines Knotenpunktes (**3**) aus einer Kombination eines teilweisen Formschlusses zweier Hohlprofile (**1, 2**) und des Kraftschlusses und / oder Formschlusses mit der aufgeschäumten Formmasse kann mit vergleichsweise niedrigen Werkzeugkosten und auf einfache Weise ein fester Knotenpunkt (**3**) realisiert werden.

## Beschreibung

Die Erfindung betrifft einen Rahmen aus Hohlprofilen gemäß des Oberbegriffs des Patentanspruchs 1.

Allgemein bekannt sind Rahmen aus Hohlprofilen mit mindestens einem Knotenpunkt. Solche Knotenpunkte zwischen zwei Hohlprofilen sind nur sehr aufwendig als Gussknoten oder durch komplizierte Schweißprozesse darstellbar.

Der Erfindung liegt die Aufgabe zugrunde, einen Rahmen aus Hohlprofilen zu schaffen, bei dem zumindest ein Knotenpunkt besonders einfach hergestellt ist.

Diese Aufgabe wird durch die Merkmale des Patentanspruchs 1 gelöst.

Ein Rahmen aus Hohlprofilen weist mindestens einen Knotenpunkt auf, an dem mindestens ein Hohlprofil eine Aussparung hat, in der ein anderes Hohlprofil zumindest in einer Richtung formschlüssig gehalten ist. Kerngedanke der Erfindung ist es, dass auf die Hohlprofile zumindest im Bereich des Knotenpunktes Formmasse kraftschlüssig und / oder formschlüssig aufgeschäumt ist. Hohlprofile weisen eine deutlich höhere Biege- und Torsionssteifigkeit auf als nicht geschlossene Profile. Ein Rahmen aus Hohlprofilen weist daher eine hohe Steifigkeit bei einem dazu relativ geringen Gewicht auf. Durch die erfindungsgemäße Gestaltung eines Knotenpunktes aus einer Kombination eines teilweisen Formschlusses zweier Hohlprofile und des Kraftschlusses und / oder Formschlusses mit der aufgeschäumten Formmasse kann mit vergleichsweise niedrigen Werkzeugkosten und auf einfache Weise ein fester Knotenpunkt realisiert werden. Ein auf diese Weise hergestellter Rahmen hat auch gegenüber der bekannten Hybridtechnik, bei der offene Metallprofile mit Kunststoffrippen verstärkt werden, deutlich Vorteile. Die Herstellung eines Rahmens in der Hybridtechnik ist werkzeugtechnisch sehr aufwendig und die Profile, die die Basis bilden, sind nicht geschlossen, sodass die Steifigkeit eines Hybridrahmens niedriger als des erfindungsgemäßen Rahmens mit geschlossenen Hohlprofilen ist.

Alternativ oder idealerweise zusätzlich zum Kraftschluss umgreift die Formmasse zumindest eines der Hohlprofile teilweise formschlüssig. Die Gefahr, dass ein Hohlprofil sich von der Formmasse löst, wird dadurch minimiert. Ein derartiger Formschluss kann günstigerweise durch seitliche Flansche an den Hohlprofilen erzielt werden, die nach dem Umschäumen in der Formmasse eingebettet sind. In einer vorteilhaften Ausgestaltung umgreift die Formmasse den Knotenpunkt formschlüssig. Auch dies erhöht die maximal übertragbare Kraft deutlich. Wenn der zu schaffende Formschluss bereits bei der Erstellung des Umschäumungswerkzeugs berücksichtigt wird, ist der Formschluss praktisch kostenneutral herstellbar.

In einer besonders günstigen Weiterbildung bildet die Formmasse eine flächige Tragstruktur auf dem Rahmen. Zur flächigen Aufnahme von Belastungen wird häufig auf einem Rahmen eine flächige Tragstruktur angebracht. Diese flächige Tragstruktur kann bei dem erfindungsgemäßen Rahmen gleich aus der Formmasse geschaffen werden, die sowieso auf die Hohlprofile aufgeschäumt wird. Es ist also weder ein separates Bauteil für die flächige Tragstruktur erforderlich, noch entstehen zusätzliche Arbeitsschritte zur Aufbringung der flächigen Tragstruktur. Außerdem kann die flächige Tragstruktur aus der Formmasse bei einer relativ geringen Dicke zusätzlich noch Energieabsorptionseigenschaften aufweisen.

Auf der flächigen Tragstruktur ist idealerweise eine Beplankung befestigt. Die Befestigung der Beplankung kann in einer besonders einfachen Ausführung dadurch erfolgen, dass die Beplankung zur Befestigung zwei gegenüberliegende Seiten der flächigen Tragstruktur formschlüssig umgreift und an einer Stelle auf der Tragstruktur befestigt ist. Eine solche Beplankung, die beispielsweise aus Kunststoff ist, kann leicht auf den Rahmen mit der flächigen Tragstruktur aufgeschoben werden. Eine so befestigte Beplankung kann sich unabhängig von der flächigen Tragstruktur bei Wärme ausdehnen, ohne dass sich die Befestigung lösen würde. Außerdem können so Fertigungstoleranzen der flächigen Tragstruktur leicht ausgeglichen werden, zumal Bauteile aus Formmasse derzeit meist noch mit relativ hohen Toleranzen behaftet sind.

Die flächige Tragstruktur bildet vorteilhafterweise die Basis einer Rückenlehne eines Kraftfahrzeugsitzes. Die Beplankung der flächigen Tragstruktur ist dann günstigerweise ein Lehnenkissen. Eine so aufgebaute Rückenlehne weist gleich mehrere Vorteile auf. Die flächige Tragstruktur kann bei einem Unfall Aufprallenergie beispielsweise von losen Gegenständen, die von hinten auf die Rückenlehne prallen, gut absorbieren, sodass die Rückenlehne nicht durchschlagen wird. Der gesamte tragende Aufbau der Rückenlehne ist vergleichsweise sehr leicht, da nur leichte Hohlprofile und Formmasse zum Einsatz kommen. Unterschiedliches Wärmeausdehnungsverhalten zwischen dem Lehnenkissen und dem tragenden Aufbau der Rückenlehne bei starken Temperaturschwankungen, wie sie je nach Jahreszeit in einem Fahrzeug vorkommen, stellen aufgrund der Befestigung des Lehnenkissens kein Problem mehr dar.

Alternativ kann die flächige Tragstruktur auch als Basis einer Tür oder einer Klappe eines Fahrzeugs dienen. Die sichtbare Außenhaut kann dann als Beplankung auf der Tragstruktur befestigt werden.

Die Formmasse ist idealerweise ein Leichtmetallschaum, wie beispielsweise ein Aluminiumschaum, ein PU-Schaum oder ein fasergefüllter Thermoplast. Aluminiumschaum ist im Vergleich zu anderen Leichtmetallschäumen sehr preiswert. Sehr geeignet sind auch Hohlprofile aus Aluminium. Solche Hohlprofile sind leicht herstellbar und weisen bezogen auf ihre Steifigkeit ein außerordentlich geringes Gewicht auf. Sie sind damit für den Leichtbau von großer Bedeutung. Wenn zugleich Aluminiumschaum und Hohlprofile aus Aluminium verwendet werden, kommen noch zwei weitere große Vorteile hinzu: Zum einen weisen dann die Hohlprofile und die Formmasse ein identisches Wärmeausdehnungsverhalten auf, da sie beide aus dem gleichen Material bestehen. Zum anderen besteht der ganze Rahmen nur aus einem einzigen Werkstoff, sodass trotz der kraftschlüssigen Verbindung zwischen den Hohlprofilen und der Formmasse ein solcher Rahmen problemlos recycelt werden kann. PU-Schäume und fasergefüllte Thermoplaste weisen dagegen als Formmasse den Vorteil auf, dass sie eine höhere Zugfestigkeit als ein Leichtmetallschaum haben.

Ein erfindungsgemäßer Rahmen wird günstigerweise durch ein Verfahren hergestellt, dass durch die folgenden drei Schritte gekennzeichnet ist:
a) ein erstes Hohlprofil mit einer Aussparung für ein zweites Hohlprofil wird in ein offenes Druckgusswerkzeug eingelegt,
b) das zweite Hohlprofil wird in das offene Druckgusswerkzeug so eingelegt, dass es im Bereich des Knotenpunktes in der Aussparung des ersten Hohlprofils zum Liegen kommt,
c) das Druckgusswerkzeug wird geschlossen, wobei die beiden Hohlprofile in ihrer Lage fixiert werden, und anschließend die Formmasse aufgeschäumt wird.

Beim Schließen des Werkzeugs werden die Hohlprofile im Umschäumungswerkzeug fixiert. Diese Fixierung kann beispielsweise durch Haltestifte erfolgen. An den Stellen, an denen die Fixierungen die Hohlprofile halten, sind am fertigen Rahmen Durchbrüche in der Formmasse sichtbar.

Weitere vorteilhafte Ausgestaltungen sind Gegenstand von Unteransprüchen.

In der Zeichnung ist ein Ausführungsbeispiel der Erfindung dargestellt, das im folgenden näher beschrieben wird. Die einzelnen Figuren zeigen in schematischer Darstellungsweise:
- **Fig.** 1: eine perspektivische Ansicht einer Rückenlehne eines Fahrzeugsitzes mit einem erfindungsgemäßen Rahmen als Tragstruktur und
- **Fig.** 2: einen Schnitt senkrecht durch die Rückenlehne von **Fig.** 1 entlang der Schnittlinie II - II.

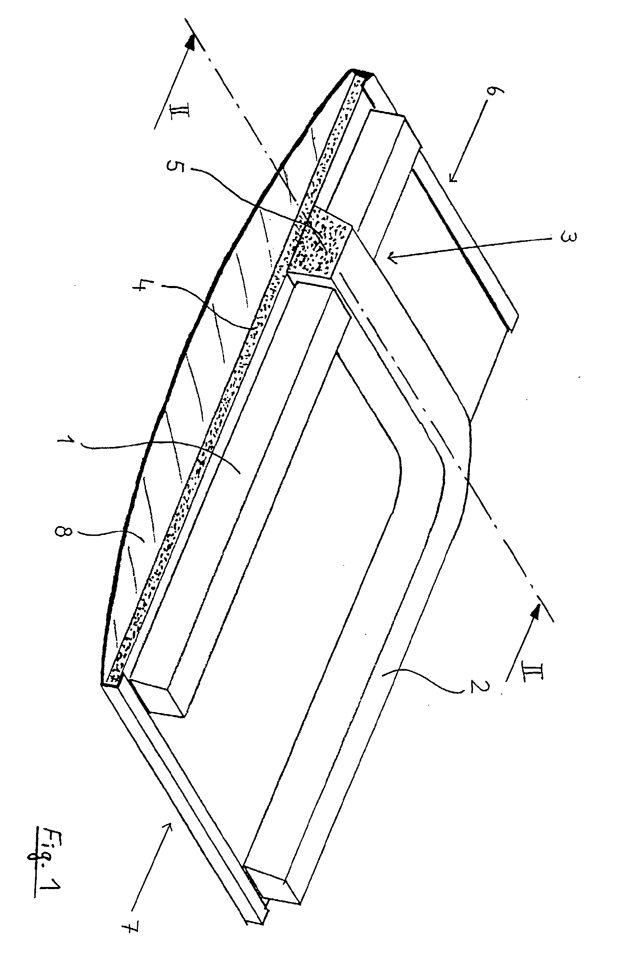

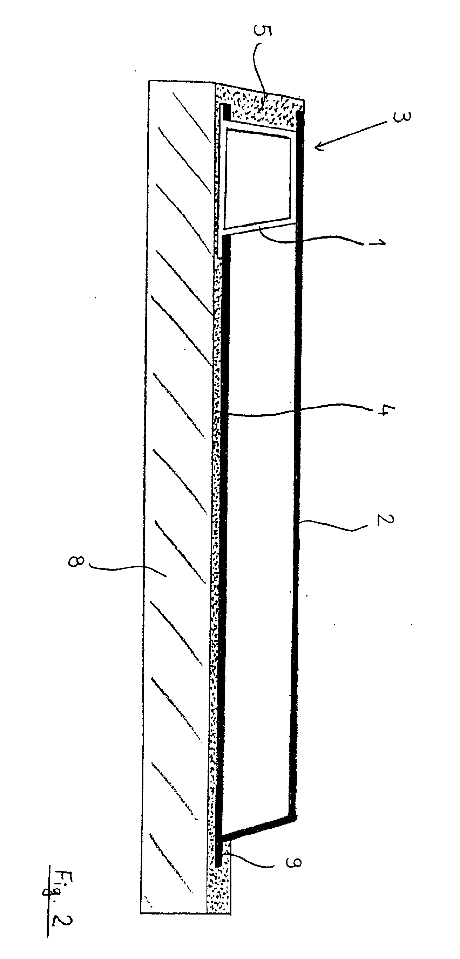

Zwei Aluminium-Hohlprofile 1 und 2 bilden, wie in **Fig.** 1 und 2 dargestellt, einen Rahmen mit einem T-förmigen Knotenpunkt 3. An dem Knotenpunkt 3 ist das endende Hohlprofil 2 teilweise ausgespart. Das am Knotenpunkt durchgehende Hohlprofil 1 ist so angeordnet, dass es größtenteils in der Aussparung zum Liegen kommt und formschlüssig in Längsrichtung des endenden Hohlprofils 2 gehalten wird. Auf die Unterseiten der beiden Hohlprofile 1 und 2 ist eine flächige Tragstruktur 4 aus Aluminiumschaum aufgeschäumt. Da sowohl die Hohlprofile 1 und 2 als auch die flächige Tragstruktur 4 aus Aluminium bestehen, bilden sie untereinander einen festen Kraftschluss. Dadurch werden die beiden Hohlprofile 1 und 2 in allen Richtungen indirekt fest zu einem steifen Rahmen verbunden. Der offene Querschnitt 5 des am T-förmigen Knotenpunkt 3 endenden Hohlprofils 2 ist formschlüssig mit dem Aluminiumschaum der flächigen Tragstruktur 4 ausgeschäumt. Zusätzlich weisen die beiden Hohlprofile 1 und 2 seitliche Flansche 9 auf, die formschlüssig miteingeschäumt sind, wie es im Schnitt in **Fig.** 2 erkennbar ist. Dieser zusätzliche Formschluss verstärkt noch die Verbindung der Hohlprofile 1 und 2 mit dem Aluminiumschaum. Auf die obere und untere Kante 6 und 7 der flächigen Tragstruktur 4 ist, wie in **Fig.** 1 gezeigt, ein Lehnenpolster 8 aufgeschoben, das zusätzlich an einem hier nicht gezeigten Punkt fest mit der flächigen Tragstruktur 4 verbunden ist.

Durch den Kraftschluss der beiden Hohlprofile 1 und 2 mit der flächigen Tragstruktur 4, den teilweisen Formschluss der beiden Hohlprofile 1 und 2 untereinander und den Formschluss des Hohlprofils 2 an seinem offenen Querschnitt 5 mit der flächigen Tragstruktur 4 entsteht ein sehr leichter und steifer Verband, der als tragender Aufbau der Rückenlehne dient.

Zur Herstellung dieses Verbands wird zuerst das Hohlprofil 2 in ein Umschäumungswerkzeug eingelegt. Dann wird das zweite Hohlprofil 1 eingelegt, sodass es im Bereich der Aussparung des Hohlprofils 2 formschlüssig gehalten ist. Danach wird das Umschäumungswerkzeug geschlossen, wobei die beiden Hohlprofile 1 und 2 mit Stiften exakt in ihrer jeweiligen Position fixiert werden. Anschließend wird der Aluminiumschaum eingeschossen, der auf den Hohlprofilen 1 und 2 zum Liegen kommt und den offenen Querschnitt 5 ausschäumt.

## Patentansprüche

1. Rahmen aus Hohlprofilen, der mindestens einen Knotenpunkt aufweist, an dem mindestens ein Hohlprofil eine Aussparung hat, in der ein anderes Hohlprofil zumindest in einer Richtung formschlüssig gehalten ist, **dadurch gekennzeichnet, dass** auf die Hohlprofile (**1, 2**) zumindest im Bereich des Knotenpunktes (**3**) Formmasse kraftschlüssig und / oder formschlüssig aufgeschäumt ist.

2. Rahmen nach Anspruch 1, **dadurch gekennzeichnet, dass** die Formmasse eine flächige Tragstruktur (**4**) auf dem Rahmen bildet.

3. Rahmen nach Anspruch 1 oder 2, **dadurch gekennzeichnet, dass** zumindest eines der Hohlprofile (**1, 2**) mindestens einen seitlichen Flansch (9) aufweist, der formschlüssig mit Formmasse umschäumt ist.

4. Rahmen nach einem der vorhergehenden Ansprüche, **dadurch gekennzeichnet, dass** die Formmasse den Knotenpunkt (**3**) zumindest teilweise formschlüssig umgreift.

5. Rahmen nach einem der Ansprüche 2 bis 4, **dadurch gekennzeichnet, dass** auf der flächigen Tragstruktur (**4**) eine Beplankung (**8**) befestigt ist.

6. Rahmen nach Anspruch 5, **dadurch gekennzeichnet, dass** die Beplankung (**8**) zur Befestigung zwei gegenüberliegende Seiten (**6, 7**) der flächigen Tragstruktur (**4**) formschlüssig umgreift und an mindestens einer Stelle auf der Tragstruktur (**4**) befestigt ist.

7. Rahmen nach einem der Ansprüche 2 bis 6, **dadurch gekennzeichnet, dass** die flächige Tragstruktur (**4**) die Basis einer Rückenlehne eines Kraftfahrzeugsitzes bildet.

8. Rahmen nach Anspruch 7, **dadurch gekennzeichnet, dass** die Beplankung (**8**) ein Lehnenkissen ist.

9. Rahmen nach einem der vorhergehenden Ansprüche, **dadurch gekennzeichnet, dass** die Formmasse ein Leichtmetallschaum, wie beispielsweise ein Aluminiumschaum, ein PU-Schaum oder ein fasergefüllter Thermoplast ist.

10. Rahmen nach einem der vorhergehenden Ansprüche, **dadurch gekennzeichnet, dass** die Hohlprofile (**1, 2**) aus Aluminium sind.

11. Verfahren zur Herstellung eines Rahmens nach Anspruch 1, **dadurch gekennzeichnet, dass**
a) ein erstes Hohlprofil (**2**) mit einer Aussparung für ein zweites Hohlprofil (**1**) in ein offenes Druckgusswerkzeug eingelegt wird,
b) das zweite Hohlprofil (**1**) in das offene Druckgusswerkzeug so eingelegt wird, dass es im Bereich des Knotens (**3**) in der Aussparung des ersten Hohlprofils (**2**) zum Liegen kommt und
c) das Druckgusswerkzeug geschlossen wird, wobei die beiden Hohlprofile in ihrer Lage fixiert werden, und anschließend die Formmasse aufgeschäumt wird.
